# EUROPÄISCHE PATENTSCHRIFT

(11) **EP 2 182 377 B1**
(45) Veröffentlichungstag und Bekanntmachung des Hinweises auf die Patenterteilung: **19.09.2012**
(21) Anmeldenummer: 08105705.1
(22) Anmeldetag: 30.10.2008
(51) Int. Cl.: G01S 7/486

(54) **Entfernungsmessender Laserscanner**
Laser scanner to measure distance
Scanner laser mesurant l'éloignement

(43) Veröffentlichungstag der Anmeldung: 05.05.2010
(73) Patentinhaber: SICK AG, 79183 Waldkirch (DE)
(72) Erfinder: Pastor, Sebastian, 79104 Freiburg (DE); Schopp, Thomas, 79112 Freiburg (DE); Themel, Helmut, 79183 Waldkirch (DE); Zienkiewicz, Jacek, 79098 Freiburg (DE)
(74) Vertreter: Hehl, Ulrich

(56) Entgegenhaltungen:
- EP-A- 1 308 693
- EP-A- 1 329 739
- EP-A- 1 879 044
- DE-A1- 10 236 486
- US-A- 5 311 353

## Beschreibung

Die Erfindung betrifft einen entfernungsmessenden Laserscanner sowie ein Verfahren zur Erfassung von Entfernungen mittels eines Laserscanners mit einer Verstärkung des Empfangssignals nach dem Oberbegriff von Anspruch 1 beziehungsweise 11.

Laserscanner können eingesetzt werden, um Abstände oder Entfernungen in einem Überwachungsbereich zu bestimmen. Dazu wird die Lichtlaufzeit zwischen Aussenden und Empfang eines Lichtsignals ausgewertet, das von einer Oberfläche in dem Überwachungsbereich remittiert oder reflektiert wird.

Man unterscheidet zwei Verfahren, nämlich Pulslaufzeitverfahren und Phasenverfahren. In Pulslaufzeitverfahren werden einzelne kurze Lichtpulse ausgesandt und deren Laufzeit anhand eines Charakteristikums des Pulses, beispielsweise dessen Maximum bestimmt. Bei einem Phasenverfahren wird das Licht amplitudenmoduliert und die Phasenverschiebung des ausgesandten gegenüber dem empfangenen Licht ausgewertet. Phasenverfahren haben zunächst einen durch die verwendete Modulationsfrequenz des Lichts begrenzten Eindeutigkeitsbereich, der aber durch zusätzliche Maßnahmen erweitert werden kann. Mit beiden Verfahren erhält man jeweils den Abstandswert zu dem aktuellen Scanpunkt.

Mit Hilfe einer Scanbewegung, die häufig über bewegliche Ablenkelemente, beispielsweise einen Drehspiegel realisiert wird, können Scanlinien und damit Abstandsprofile ermittelt werden. Ist auch noch eine Bewegung in der Querrichtung zu der Scanlinie vorgesehen, etwa durch einen weiteren Ablenkmechanismus oder eine Relativbewegung durch Anbringung des Scanners an einem Fahrzeug oder über einem Förderband oder einer Straße, so können dreidimensionale Höhenkarten aufgezeichnet werden.

Der Dynamikbereich der Empfangssignalleistung, in dem ein Laserscanner arbeitet, ist sehr hoch. Eine Ursache dafür bilden unterschiedliche Oberflächeneigenschaften und damit unterschiedliches Remissionsverhalten, welches zwischen Extremen wie schwarzer Samt einerseits und einem Reflektor andererseits schwanken kann. Eine weitere Ursache liegt in dem quadratischen Empfangssignalverlust mit dem Abstand, welcher sich beispielsweise an Objektkanten sehr abrupt ändern kann. Das Empfangssystem des Laserscanners muss so ausgelegt sein, dass eine Auswertung des Empfangssignals über diesen gesamten Dynamikbereich erfolgen kann.

Herkömmlich wird häufig im Anschluss an den Lichtempfänger ein Transimpedanzverstärker eingesetzt, der für große Empfangssignale übersteuert betrieben wird. Damit stehen aber folgenden Auswertestufen die aufgrund der Übersteuerung verlorenen Signalinformationen nicht mehr zur Verfügung, und dieser Verlust hat einen erhöhten Messfehler zur Folge. Zudem ist die Signalform stark verzerrt, die empfangenen Signale sind verbreitert und erschweren die Auswertung oder machen sie unmöglich. Dies gilt besonders bei Pulsverfahren, wenn Empfangspulse etwa infolge eines Kantentreffers sehr dicht aufeinanderfolgen. Das umgekehrte Vorgehen, eine Übersteuerung durch Anpassung des Dynamikbereichs auf starke Empfangssignale zu vermeiden, führt zu einer schlechten Erkennung von schwachen Empfangssignalen und bringt daher noch schwerwiegendere Nachteile mit sich.

Es ist weiterhin bekannt, in entfernungsmessenden Lasersystemen Stellglieder zur Anpassung des Verstärkers einzusetzen. Diese sind aber für scannende Entfernungsmesser nur bedingt geeignet, weil sich die erforderlichen Verstärkungen mit der Scanbewegung ständig ändern. Zwar kann die Verstärkung an die Empfangsstärke eines früheren Messpunkts eingestellt werden. Erhält der so eingestellte Verstärker aber das nächste Messsignal, das aufgrund der Scanbewegung von einem anderen Punkt im Überwachungsbereicht remittiert wurde, so kann eine Kante oder ein Farbwechsel den lediglich auf einen benachbarten Punkt im Überwachungsbereich eingestellten Verstärker übersteuern oder ein nicht mehr auflösbar schwaches Empfangssignal liefern. Insgesamt ist durch die Stellglieder keineswegs sichergestellt, dass die Verstärkung besser passt als eine beliebige Voreinstellung. Dies gilt vor allem für kontraststarke, abwechslungsreiche Umgebungen und schnelle Scan- oder Relativbewegungen.

In der EP 1 936 400 A1 ist ein entfemungsmessender Laserscanner offenbar, der jeweils einen Vorpuls aussendet, um vor der eigentlichen Entfernungsmessung eine Information über die Empfangsstärke zu erhalten und die Sendestärke daran anzupassen. Diese leidet aber, abgesehen von dem Zusatzaufwand für das Aussenden und Auswerten des Vorpulses, an denselben Nachteilen wie eine Anpassung der Verstärkung an frühere Messsignale, dass nämlich Vorpuls und Messpuls nicht dieselbe Stelle im Überwachungsbereich treffen, was zu Amplitudenunterschieden führen kann.

Aus der EP 1 308 693 A1 ist eine optoelektronische Entfernungsmesseinrichtung bekannt, deren Empfangseinheit eine Reihenschaltung aus Arbeitswiderständen nachgeschaltet ist, denen jeweils ein separater Verstärker für den am jeweiligen Arbeitswiderstand einlaufenden, sukzessive abgeschwächten Tochterpuls zugeordnet ist. Eine Selektionseinheit wählt zur Auswertung den größten nicht übersteuerten Tochterpuls aus.

Die US 5,311,353 offenbart einen optischen Empfänger mit hohem Dynamikbereich, in dem ein erster linearer und ein zweiter logarithmischer Verstärker vorgesehen ist. Die beiden verstärkten Teilsignale werden entweder aufaddiert oder eines der beiden Signale für die Auswertung selektiert. Die Verstärkung ist für schwache Signale im Dynamikbereich des ersten Verstärkers linear und geht nach dessen Übersteuerung für starke Signale in eine logarithmische Verstärkung über.

Es ist daher Aufgabe der Erfindung, einen kostengünstigen entfernungsmessenden Laserscanner mit hoher Auswertungsgenauigkeit zu schaffen.

Diese Aufgabe wird durch einen Laserscanner gemäß Anspruch 1 und ein Verfahren zur Erfassung von Entfernungen mittels Laserscanner gemäß Anspruch 11 gelöst. Dabei geht die erfindungsgemäße Lösung von dem Prinzip aus, den für ein einzelnes Verstärkerelement zu großen Dynamikbereich aufzuteilen und somit den effektiven Dynamikbereich deutlich zu vergrößern.

Die Erfindung hat den Vorteil, dass der unempfindliche Verstärkungspfad nicht oder zumindest erst bei besonders starken Empfangssignalen übersteuert. Dies führt zu einer höheren Messgenauigkeit und ermöglicht, die verzerrungsfreie oder weniger verzerrte Form des Empfangssignals mit auszuwerten. Wegen der getrennten Auswertung von starken und schwachen Signalen ist die Trennung von einzelnen Peaks innerhalb desselben Empfangssignals oder von aufeinanderfolgenden Empfangssignalen in einem größeren Dynamikbereich möglich. Schwache Empfangssignale, etwa von einer Frontscheibe oder Nebeltröpfchen, die durch Überlappung mit dem eigentlichen Nutzsignal das Messergebnis verfälschen, können durch die getrennte Auswertung unterdrückt werden. Damit sind Entfernungs- oder Abstandsbestimmungen über den gesamten Messbereich bis dicht vor die Frontscheibe ermöglicht. Die Unterdrückung eines Störsignals von der Frontscheibe ist auch unabhängig vom Verschmutzungsgrad der Frontscheibe und deshalb robust.

Der Dynamikbereich, in dem die Signalform weitgehend informationsverlustfrei ausgewertet werden kann, ist ein Bereich verzerrungsfreier, wenigstens verzerrungsarmer und bevorzugt linearer Verstärkung. Das den beiden Verstärkungspfaden zugeleitete Signal kann das vervielfältigte Empfangssignal oder eine daraus abgeleitete Größe sein, insbesondere eine Spannung oder ein Strom.

Besonders vorteilhaft erweist sich die Erfindung bei einem pulsbasierten Laserscanner, der also als Signal Pulse verwendet, somit Lichtpulse aussendet und einen oder mehrere aus diesem Sendepuls resultierende Empfangspulse auswertet. Phasenbasierte Laserscanner können wegen des dauerhaft ausgesandten modulierten Lichts leichter dynamisch nachgeregelt werden. Besonders bei hochvariabler Umgebung beziehungsweise schnellen Bewegungen zeigt die Erfindung aber auch für phasenbasierte Entfernungsmessung Vorteile, weil sich die Empfangssignalstärke sehr rasch ändern kann und die herkömmliche Nachregelung auch bei moduliertem cw-Licht zu langsam ist. Die ausgesandten Lichtsignale können aber auch Mehrfachpulse oder andere Amplitudenmodulationen sein. Die zulässige Dauer des ausgesandten Lichtsignals hängt von der Anwendung ab, vornehmlich den zu messenden Entfernungen und der Scangeschwindigkeit.

Herkömmlich wird bei pulsbasierten Verfahren häufig nur ein Empfangspuls erwartet und ausgewertet. Erfindungsgemäß ist darüber hinaus vorgesehen, auch mehrfache Empfangspulse auszuwerten, die aus demselben Sendepuls resultieren. Derartige Mehrfachpulse können beispielsweise entstehen, wenn das Laserlicht zunächst durch Hindernisse wie Nebel, Regentropfen oder Glasflächen hindurchtreten muss, ehe es auf die eigentlich auszuwertende Objektoberfläche trifft. Mehrfachpulse können beispielsweise durch Aufzeichnung des gesamten Empfangssignals ausgewertet werden. Erfindungsgemäß ist möglich, die hohe Signaldynamik auch von mehreren Teilempfangspulsen oder Peak in dem Empfangssignal zu verarbeiten, die je nach Remissionseigenschaften sehr unterschiedliche Amplituden aufweisen können. Damit kann die Auswertung besonders genau sein.

Das Lichtempfangselement ist bevorzugt dafür ausgebildet, das empfangene Licht in einen Photostrom zu wandeln, wobei das Empfangssignal-Aufteilungselement Teilströme, insbesondere unterschiedlich starke Teilströme des Photostroms erzeugen und den Verstärkungspfaden zuführen kann. Nur der empfindliche Verstärkungspfad benötigt einen möglichst großen Anteil des Empfangssignals, um schwache Signale noch aufzulösen. Die Asymmetrie in den Teilströmen kann also durchaus beträchtlich sein. Immer wenn bei einem Empfangssignal der verbleibende kleinere Teilstrom in dem unempfindlichen Verstärkungspfad nicht mehr ausreicht, um ein Ausgangssignal mit hinreichender Amplitude zu erzeugen, sind die notwendigen Informationen ohnehin bereits im empfindlichen Verstärkungspfad berücksichtigt.

Der erste Verstärker ist bevorzugt mit einem empfindlicheren Dynamikbereich und/oder mit einem größeren Verstärkungsfaktor ausgebildet ist als der zweite Verstärker. Dabei wird bewusst eine Übersteuerung des empfindlichen Verstärkungspfads bereits bei Empfangssignalen moderater Stärke in Kauf genommen. In dem empfindlichen Verstärkungspfad sollen schwache Empfangssignale verarbeitet werden. Umgekehrt verstärkt der unempfindliche Verstärkungspfad weniger stark, weil dort eine Übersteuerung vermieden werden soll und schwache Empfangssignale ohnehin nicht hinreichend aufgelöst würden.

Die effektive Gesamtverstärkung in dem empfindlichen Pfad ist bevorzugt groß gegen die effektive Gesamtverstärkung in dem unempfindlichen Pfad. Die effektive Gesamtverstärkung resultiert aus einer Kombination zwischen den Signalanteilen, die dem jeweiligen Verstärkungspfad zugeführt werden, und dem Gain oder Verstärkungsfaktor von erstem und zweitem Verstärker. Die effektive Gesamtverstärkung kann sich dabei um Faktoren 5 bis 10, aber auch um Faktoren 100 oder 1000 unterscheiden. Der insgesamt zu verarbeitende Dynamikbereich kann ohne weiteres mehrere Zehnerpotenzen umfassen, und entsprechend kann auch das Verhältnis zwischen den effektiven Gesamtverstärkungen etliche Zehnerpotenzen betragen.

Erfindungsgemäß sind die Verstärkungspfade über ein Signal-Kombinierelement auf einen gemeinsamen Analog/Digital-Wandler geführt, wobei insbesondere der Analog/Digital-Wandler gemeinsam mit einem Speicher auf einem Baustein ausgebildet ist, in dem digitalisierte Empfangssignale abgelegt werden können. Die eigentliche Signalauswertung und damit die Entfernungsbestimmung erfolgt dabei digital. Bei Pulsbreiten in der Größenordnung von Nanosekunden und einer gewünschten Genauigkeit der Laufzeitbestimmung im Picosekundenbereich sind entsprechend schnelle Analog/Digitalwandler sehr kostenintensive Bausteine. Deshalb ist vorteilhaft, wenn die Empfangssignale der beiden Verstärkungspfade gemeinsam digitalisiert werden können, um mit nur einem dieser Bausteine auszukommen. Ein integrierter Speicher entkoppelt die Digitalisierung von der Auswertung, indem die Auswertungseinheit nach ihren eigenen Zeitregeln auf die das Empfangssignal repräsentierenden Daten zugreift. Die effektive Gesamtverstärkung in beiden Verstärkungspfaden wird dann so gewählt, dass für ein möglichst breites Anwendungsspektrum die Amplituden der verstärkten Empfangssignale die volle Bitbreite des Analog/Digitalwandlers ausnutzen.

Dabei ist das Signal-Kombinierelement bevorzugt als Addierer ausgebildet. Die Kombination der Empfangssignale aus den beiden Verstärkungspfaden ist dabei reversibel. Die Digitalisierung erfolgt in einem gemeinsamen Schritt in nur einem Baustein, aber die einzelnen Signale können leicht zurückgewonnen werden. Aus Sicht der Auswertungseinheit bedeutet damit der Verzicht auf einen Analog/Digitalwandler nicht mehr als ein die Messgenauigkeit wenig beeinflussender Verlust von Auflösungsgenauigkeit.

Die Auswertungseinheit weist bevorzugt einen Vorverarbeitungsabschnitt auf, der insbesondere für eine digitale Filterung und/oder digitale Invertierung bekannter Verzerrungen in dem der Digitalisierung vorgeordneten analogen Verarbeitungspfad, insbesondere den Verstärkungspfaden, ausgebildet ist. Mit Invertierung sind mathematische Operationen umfasst, welche bekannte oder auszumessende Signalverzerrungen durch die Analogelektronik digital umkehren. Der Vorverarbeitungsabschnitt kann auch als eigener Logikbaustein implementiert sein. Mit Logikbaustein ist im Rahmen dieser Beschreibung ein programmierbarer digitaler Baustein gemeint, beispielsweise ein Mikroprozessor, ein FPGA (Field Programmable Gate Array), ein DSP (Digital Signal Processor) oder ein ASIC (Application-Specific Integrated Circuit).

Die Auswertungseinheit weist vorteilhafterweise einen Hauptbearbeitungsabschnitt auf, der dafür ausgebildet ist, mehrere oder sämtliche Peaks eines auf ein ausgesandtes Lichtsignal folgenden Empfangssignals daraufhin auszuwerten, welcher Peak einem Objekt zuzuordnen ist, dessen Entfernung bestimmt werden soll, insbesondere mittels Funktionsfit. Beispielsweise kann bekannt sein, dass der erste Peak reproduzierbar von der eigenen Frontscheibe stammt und daher nicht ausgewertet werden soll. Aus der Peakform kann geschlossen werden, ob es sich um Reflexe von Regentropfen oder Nebel handelt. Diese Peaks kommen als Messwert nicht in Betracht, von Interesse ist nur ein Objekt im Überwachungsbereich. Die Lage des dem Objekt zugehörigen Peaks muss möglichst genau bestimmt werden, um die Lichtlaufzeit und damit die Entfernung zu kennen.

Der Vorverarbeitungsabschnitt oder der Hauptbearbeitungsausschnitt ist bevorzugt für eine Vorselektion ausgebildet, mittels derer entschieden wird, ob jeweils für eine Entfernungsbestimmung die Peaks des Empfangssignals aus dem empfindlichen oder aus dem unempfindlichen Verstärkungspfad oder aus beiden Verstärkungspfaden ausgewertet werden. Wegen der großen Unterschiede der effektiven Gesamtverstärkung ist in der Praxis das verstärkte Empfangssignal eines der beiden Verstärkungspfade entweder übersteuert oder kaum erkennbar. Die Entscheidung, welcher Verstärkungspfad jeweils ausgewertet wird, kann beispielsweise anhand der Frage erfolgen, ob in dem unempfindlichen Verstärkungspfad ein Peak mit einer geforderten Mindesthöhe erkannt werden kann. Ist das der Fall, wird er ausgewertet, denn dann ist klar, dass der empfindliche Verstärkungspfad übersteuert ist. Ansonsten wird das Empfangssignal des empfindlichen Verstärkungspfades ausgewertet.

In bevorzugter Weiterbildung der Erfindung kann ein dritter und/oder weiterer Verstärkungspfad mit einem eigenen Empfindlichkeitsbereich vorgesehen sein. Selbst wenn sich nämlich zwei Verstärkungspfade den Dynamikbereich aufteilen, kann angesichts der zu erwartenden hohen Dynamik ein einzelner Verstärker mit dem ihm zugeordneten Dynamikbereich überfordert sein. Alternativ können kostengünstigere Verstärker mit jeweils kleinerem verzerrungsfreien oder linearen Bereich eingesetzt werden. Die n Verstärkungspfade sind dann bevorzugt zueinander so ausgebildet, dass die effektiven Verstärkungsfaktoren *Gᵢ* eine Reihe *Gᵢ₊₁*>>*Gᵢ*, *i=1..n* bilden.

Das erfindungsgemäße Verfahren kann auf ähnliche Weise durch weitere Merkmale ausgestaltet werden und zeigt dabei ähnliche Vorteile. Derartige weitere Merkmale sind beispielhaft, aber nicht abschließend, in den sich an den Vorrichtungsanspruch anschließenden Unteransprüchen beschrieben.

Die Erfindung wird nachstehend auch hinsichtlich weiterer Vorteile und Merkmale unter Bezugnahme auf die beigefügte Zeichnung anhand von Ausführungsbeispielen erläutert. Die Figuren der Zeichnung zeigen in:
- Fig. 1: eine stark schematisierte Ansicht der Arbeitsweise eines entfernungsmessenden Laserscanners und seines beispielhaften Sende- und Empfangssignals;
- Fig. 2: ein Blockschaltbild einer Ausführungsform des Empfangspfads eines erfindungsgemäßen entfernungsmessenden Laserscanners;
- Fig. 3: ein erstes Beispiel für den zeitlichen Verlauf der Spannungsamplitude des verstärkten Empfangssignals in zwei Teilpfaden des Empfangspfades gemäß Figur 2 bei einem schwachen Empfangssignal;
- Fig. 4: ein zweites Beispiel für den zeitlichen Verlauf der Spannungsamplitude des verstärkten Empfangssignals in zwei Teilpfaden des Empfangspfades gemäß Figur 2 bei einem starken Empfangssignal;
- Fig. 5: ein drittes Beispiel für den zeitlichen Verlauf der Spannungsamplitude des verstärkten Empfangssignals in zwei Teilpfaden des Empfangspfades gemäß Figur 2 bei einem Kantentreffer mit starkem Empfangssignal;
- Fig. 6: ein Blockschaltbild einer weiteren Ausführungsform des Empfangspfades eines erfindungsgemäßen entfernungsmessenden Laserscanners mit nur einem Analog/Digital-Wandler; und
- Fig. 7: eine Darstellung des zeitlichen Verlaufs der Spannungsamplituden von verstärkten Einzelsignalen und Summensignal zur Erläuterung der gemeinsamen Digitalisierung in dem Analog/Digital-Wandler gemäß Figur 6.

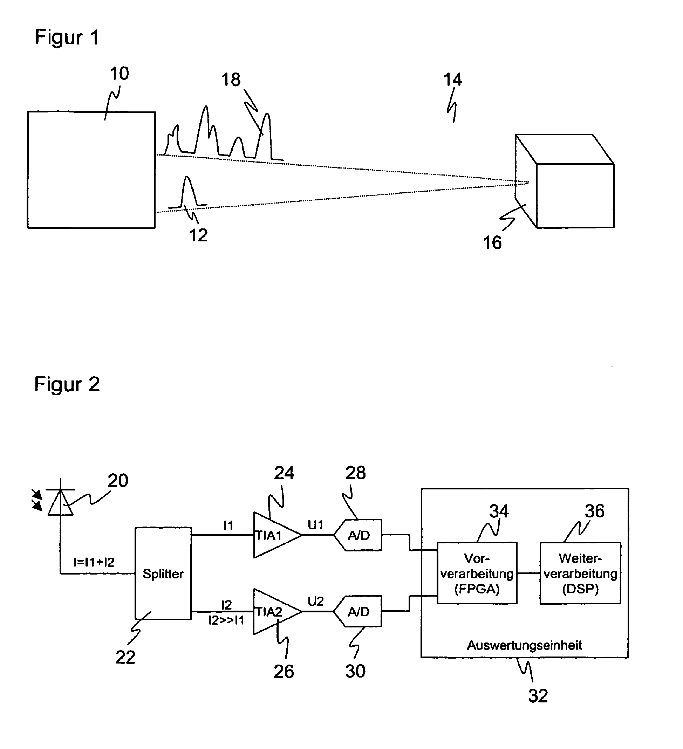

Figur 1 zeigt in sehr schematischer Vereinfachung einen Laserscanner 10, welcher mit einer Laserlichtquelle einen Lichtpuls 12 in einen Überwachungsbereich 14 aussendet. Der Lichtpuls 12 wird an einer Oberfläche 16 in dem Überwachungsbereich 14 reflektiert oder remittiert und als Empfangspuls 18 von dem Laserscanner 10 empfangen. Aus der Lichtlaufzeit zwischen Aussenden und Empfangen des Lichtpulses 12, 18 ermittelt der Laserscanner 10 den Abstand der Oberfläche 16.

Wie einleitend gesagt, kann alternativ zu einem Pulsverfahren auch ein Phasenverfahren eingesetzt werden. Die Erfindung wird aber im Weiteren am Beispiel von Pulsen beschrieben. Die allgemeine Funktionsweise eines Laserscanners 10 einschließlich dessen Scanmechanismus, etwa durch einen Drehspiegel realisiert, Optiken im Sende- und Empfangskanal und dergleichen ist bekannt, beispielsweise aus der DE 43 40 756 A1 oder der einleitend bereits genannten EP 1 936 400 A1, und wird hier nicht näher erläutert.

Der Empfangspuls 18 weist im Gegensatz zum Sendepuls 12 mehrere Peaks auf. Diese mehrfachen Peaks können durch nicht dargestellte teiltransparente Störungen im optischen Pfad zwischen Laserscanner 10 und Oberfläche 16 entstehen. Ursachen können beispielsweise Nebel- oder Regentropfen oder Glasflächen einschließlich einer Frontscheibe des Laserscanners 10 sein. Erfindungsgemäß ist in einer bevorzugten Ausführungsform vorgesehen, die Form des Empfangspulses 18 insgesamt auszuwerten, also innerhalb der Auswertung zu entscheiden, welcher Peak der tatsächliche Messempfangspuls von der Oberfläche 16 ist. Dazu wird der Verlauf des Empfangspulses 18 gesampelt und ausgewertet.

Figur 2 zeigt in einem Blockschaltbild den Empfangskanal des Laserscanners 10 gemäß einer Ausführungsform der Erfindung. Der Empfangspuls 18 wird von einem Lichtempfangselement 20, beispielsweise einer Photodiode, einer PIN-Diode (positive intrinsic negative diode), einer APD (Avalanche Photodiode) in ein elektrisches Signal beziehungsweise einen Photostrom I umgewandelt. Das Lichtempfangselement 20 könnte alternativ auch als Vielzahl, etwa als Matrix oder Zeile photoempfindlicher Elemente ausgebildet sein.

Dem Lichtempfangselement 20 ist ein Splitter 22 nachgeschaltet. Der Splitter 22 teilt den Photostrom stark asymmetrisch in zwei Teilströme I1 und I2, so dass also I2>>I1 gilt. Beide Teilströme werden dann in jeweils einem ersten und zweiten Transimpedanzverstärker 24, 26 verstärkt. Die Transimpedanzverstärker haben untereinander unterschiedliche Dynamikbereiche und unterschiedliche Verstärkungsfaktoren. Der erste Transimpedanzverstärker 24 in dem oberen unempfindlichen Pfad arbeitet für relativ starke Eingangssignale im verzerrungsfreien beziehungsweise linearen Bereich und verstärkt mit einem relativ geringen Verstärkungsfaktor. Umgekehrt arbeitet der zweite Transimpedanzverstärker 26 in dem unteren Pfad für schwache, insbesondere die schwächsten aufzulösenden Empfangssignale möglichst verzerrungsfrei und verstärkt mit einem hohen Verstärkungsfaktor.

Die Spannungssignale U1, U2 der verstärkten Teilströme I1, I2 werden in Analog/Digital-Wandlern 28, 30 digitalisiert und anschließend in einer Steuerung 32 digital ausgewertet, um einen zu der Oberfläche 16 gehörigen Peak, dessen Lage und somit über die Lichtlaufzeit bis zu der Oberfläche 16 deren Abstand oder Entfernung zu berechnen.

Die Steuerung weist einen oder mehrere Logikbausteine auf. In einem FPGA 34 werden die digitalisierten Empfangssignale vorverarbeitet und mittels eines DSP 36 weiterbearbeitet. Auch andere oder ein gemeinsamer Logikbaustein kann für diese Aufgaben eingesetzt sein.

Die Vorverarbeitung kann unter anderem digitale Filterung oder eine inverse digitale Operation zum Ausgleich von nicht treuen analogen Signalverarbeitungen umfassen. Als digitale Filter können rekursive Filter (IIR, Infinite Impulse Response) wie nichtrekursive Filter (FIR, Finite Impulse Response) eingesetzt werden. Ziel ist jeweils eine Rauschunterdrückung ohne Veränderung der Pulsform und Pulslage.

Inverse Faltung oder digitale Dekomprimierung sind Beispiele für eine digitale Vorverarbeitung, um Verzerrungen durch den Analogteil des Empfangspfads auszugleichen. Die begrenzte Bandbreite der analogen Bausteine führt zum Beispiel dazu, dass höhere Signalamplituden abgeschnitten werden. Kennt man aber die Übertragungsfunktion der analogen Bauelemente, so kann daraus eine inverse Funktion berechnet werden, welche die entstehende Verzerrung rückgängig macht. Damit werden die abgeschnittenen Amplitudeninformationen digital rekonstruiert. In dieser Weise kann Vorwissen über die Analogelektronik genutzt werden, um Verzerrungen des Empfangssignals auszugleichen.

Nach derartiger Vorverarbeitung in dem FPGA 34 steht dem DSP 36 ein entrauschtes und zumindest teilentzerrtes Signal zur Weiterverarbeitung zur Verfügung. Hier werden zunächst Peaks erkannt, indem Maxima oberhalb eines Rauschschwellwerts gesucht werden. In diese Peaks werden dann Funktionen gefittet, welche der erwarteten Empfangspulsform entsprechen. Diese erwartete Empfangspulsform hängt in erster Linie von dem ausgesandten Lichtpuls ab. Einfache Auswertung ermöglichen parabelförmige Pulse, denn hier genügen bereits drei Samplepunkte für den Polynomfit. Die aus der gefitteten Peakfunktion bestimmte Lage des Maximums ist nicht auf das Gitter der Samplepunkte beschränkt, so dass die Genauigkeit im Subsamplebereich liegt.

Zusätzlich zu der Lage des Maximums können auch weitere Charakteristika in die Lagebestimmung einfließen, etwa Wendepunkt, steigende und fallende Flanken, Symmetrien, die Pulsbreite und andere.

Die beschriebene digitale Verarbeitung zur Erkennung des richtigen Peaks und dessen Lage in der Steuerung 32 sind beispielhaft zu verstehen, die Erfindung ist hierauf nicht beschränkt.

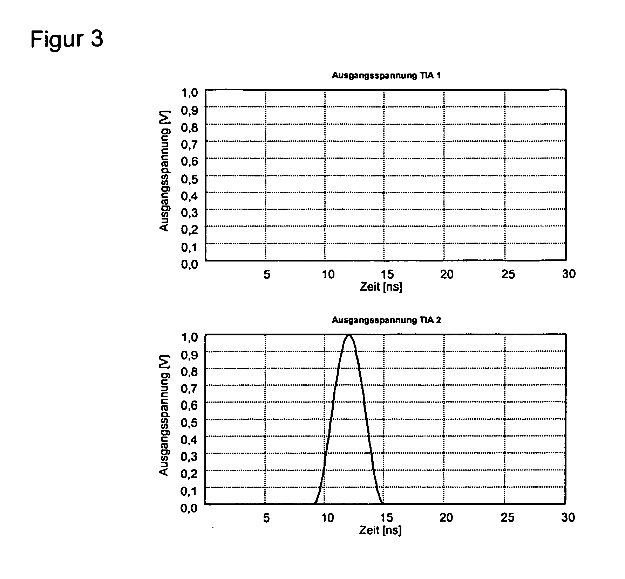

Die beschriebene Auswertung erfolgt jeweils nur mit einem der beiden Signale entweder aus dem Verstärkungspfad mit dem unempfindlichen ersten Verstärker 24 oder aus dem Verstärkungspfad mit dem empfindlichen zweiten Verstärker 26. Alternativ können auch beide Signale ausgewertet werden. Die Figuren 3 bis 5 zeigen einige beispielhafte zeitliche Empfangssignalverläufe zur Illustration der unterschiedlichen Verstärkung in den beiden Pfaden. Dabei ist jeweils im oberen Teil der Figur der Spannungsverlauf nach dem unempfindlichen ersten Verstärker 24 und in dem unteren Teil der Figur der Spannungsverlauf nach dem empfindlichen zweiten Verstärker 26 dargestellt, wobei in der Y-Achse ein Spannungsbereich bis zu einer Grenze von 1V dargestellt ist, welche beispielhaft für die maximale Ausgangsamplitude der Verstärker 24, 26 steht.

In Figur 3 wird ein schwaches Reflexsignal empfangen, wie es beispielsweise beim Durchtritt des ausgesandten Lichtpulses an der Frontscheibe entsteht. Der Verstärker 24 erhält einen zu kleinen Teilstrom I1 und hat einen zu geringen Verstärkungsfaktor, um das schwache Empfangssignal aufzulösen. Deshalb ist kein Empfangssignal zu erkennen, und dementsprechend kann in der Steuerung 32 auch auf eine Auswertung verzichtet werden. Das schwache Empfangssignal liegt dagegen voll im Dynamikbereich des zweiten Verstärkers 26 und wird zu einem gut erkennbaren, in der Darstellung sogar den Amplitudenbereich voll ausnutzenden Puls verstärkt. Dessen Lage und Amplitude kann von der Steuerung 32 präzise erkannt werden. Die Amplitude kann als Maß für die Verschmutzung der Frontscheibe genutzt werden.

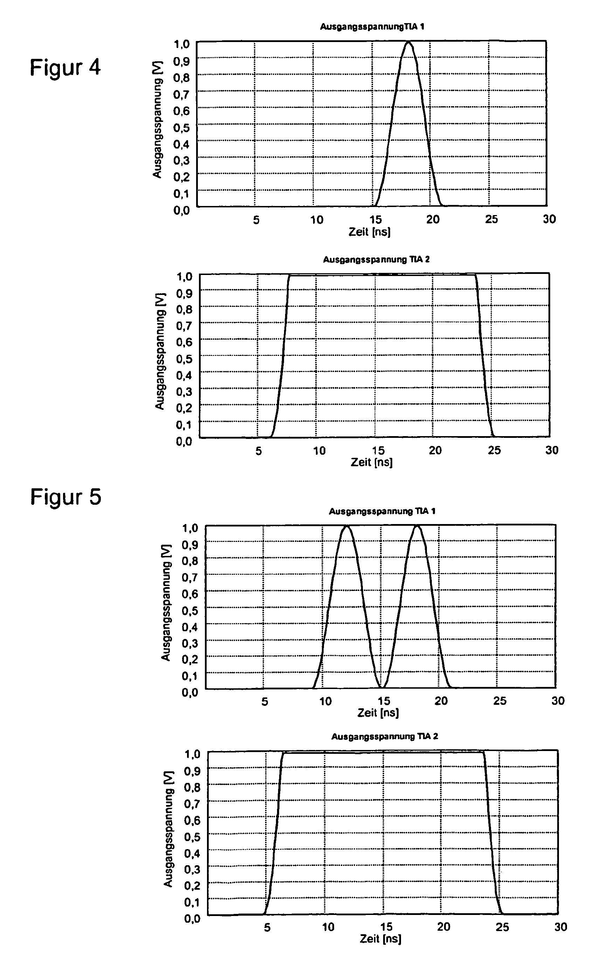

Figur 4 zeigt zum Kontrast ein starkes Empfangssignal, wie es etwa an einer Oberfläche 16 mit einigermaßen guten Remissionseigenschaften entstehen könnte. Das Signal ist außerdem überlagert von dem Frontscheibenreflex gemäß Figur 3. Der Verstärker 24 ist weiterhin zu unempfindlich, um den Frontscheibenreflex aufzulösen. Dagegen ist der Messpuls von der Oberfläche 16 gut zu erkennen und kann präzise ausgewertet werden, ohne dass der Frontscheibenreflex den Messwert in irgend einer Weise verfälscht. In dem empfindlichen Verstärkungspfad geht der Frontscheibenreflex untrennbar in einen hoffnungslos übersteuerten Messpuls über. Zwar könnte man auch hier noch anhand der Flanken den Schwerpunkt des Überlagerungspulses bestimmen und damit eine gewisse Information über die Entfernung erhalten. Ein derart ermittelter Abstandswert wäre aber ungenau, so dass diese Auswertung allenfalls zur Plausibilisierung des eigentlichen Messwerts aus dem unempfindlichen Verstärkungspfad genutzt werden kann.

In dem Beispiel der Figur 5 entsteht ein Signalverlauf mit zwei dicht aufeinanderfolgenden Empfangspulsen vergleichbarer Signalstärke beispielsweise bei einem Kantentreffer oder einem teiltransparenten Hindernis kurz vor einer relativ schwach remittierenden Oberfläche 16. In dem Verstärkungspfad mit dem unempfindlichen ersten Verstärker 24 sind zwei ausgeprägte, gut separierbare Empfangspulse erkennbar. Die Lage des oder der Messpulse kann deshalb präzise berechnet werden. Wie schon in der Figur 4 mit einem schwachen ersten Puls ist das Empfangssignal in dem Verstärkungspfad mit dem empfindlichen Verstärker 26 stark übersteuert, und es ist überhaupt nicht erkennbar, dass es sich um zwei Empfangspulse handelt.

Sind die effektiven Verstärkungen in den beiden Verstärkungspfaden richtig austariert, so kann über einen sehr weiten Dynamikbereich, welcher denjenigen der einzelnen Verstärker 24, 26 weit übersteigt, immer in einem der beiden Verstärkungspfade das Empfangssignal ohne oder zumindest mit deutlich herabgesetzten Verzerrungen durch Übersteuerung ausgewertet werden. Damit kann auch nach einem Kantentreffer wie in Figur 5 mit einem sehr nahen Objekt der Abstand noch berechnet werden, so dass sich der Messbereich bis unmittelbar vor die Frontscheibe erstreckt.

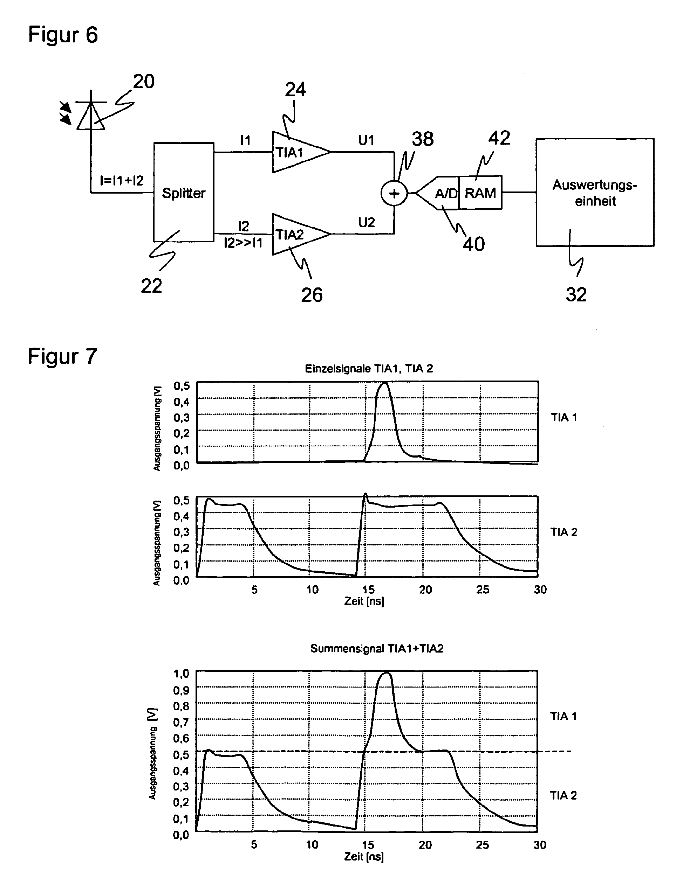

Figur 6 zeigt eine weitere Ausführungsform der Erfindung mit über einen Addierer 38 einem gemeinsamen Analog/Digitalwandler40 zugeführtem kombinierten Empfangssignal. Der Analog/Digitalwandler 40 weist einen eigenen Speicher auf, um die digitalisierten Werte abzulegen und der Steuerung 32 nach deren eigenen Zeitregeln Zugriff auf die gesampelten Empfangssignale zu geben. Statt des integrierten Speichers kann ein externer Speicher vorgesehen sein, und anstelle eines Addierers 38 kann ein anderes Element verwendet werden, welches zwei oder mehr Empfangssignale reversibel miteinander kombiniert. Die gemeinsam digitalisierten Empfangssignale werden in der Steuerung 32 ausgewertet. Damit kann ein Analog/Digital-Wandler eingespart werden.

Dies wird an einem Beispiel in der dreigeteilten Figur 7 in drei Darstellungen zeitabhängiger Spannungsverläufe - von oben nach unten - nach dem ersten Verstärker 24, dem zweiten Verstärker 26 und dem Addierer 38 illustriert. Die beiden Einzelsignale von dem ersten und zweiten Verstärker 24, 26 werden so skaliert, dass sie jeweils die halbe Maximalamplitude des Analog/Digitalwandlers 40 ausnutzen. Die beiden Teilsignale werden dann aufaddiert. Dieses unten in Figur 7 gezeigte Summensignal wird gemeinsam in dem Analog/Digitalwandler digitalisiert. Anhand der Schwelle 44 können die beiden Teilsignale anschließend digital wieder voneinander getrennt werden. Andere mathematische Operationen zur reversiblen Kombination und anschließenden Trennung sind denkbar, insbesondere andere Linearkombinationen als eine gleichgewichtete.

Analog zu den mit jeweils zwei Verstärkungspfaden beschriebenen Ausführungsformen können weitere Verstärkungspfade ergänzt werden, um den Dynamikbereich weiter zu erhöhen oder um die Anforderungen an den Dynamikbereich jedes einzelnen Verstärkungspfades herabzusetzen. Soll dabei wie in dem Ausführungsbeispiel der Figur 6 ein Analog/Digitalwandler mehrfach genutzt werden, so können einige oder alle Verstärkungspfade wie beschrieben zusammengefasst und anschließend wieder digital getrennt werden.

Auch wenn jeweils Ausführungsformen mit Bezug auf eine Figur beschrieben werden, so sind auch Mischformen von der Erfindung umfasst. Beispielsweise kann der integrierte Speicher 42 gemäß Figur 6 auch in der Ausführungsform gemäß Figur 2 eingesetzt werden. Auch können anstelle von Photoströmen und Verstärkung eines Stroms zu einem Spannungssignal auch andere Elemente eingesetzt werden, um andere elektrische Größen zu verarbeiten.

## Patentansprüche

1. Entfernungsmessender Laserscanner (10) mit einer Laserlichtquelle zum Aussenden eines Lichtsignals (12), einem Lichtempfangselement zum Empfang eines Empfangssignals (18), einer Auswertungseinheit (32), die für die Ermittlung von Entfernungen aus einer Laufzeit des Lichtsignals (12) ausgebildet ist, sowie mit einem Verstärker (24, 26) für das Empfangssignal (18),
wobei mindestens ein empfindlicher Verstärkungspfad mit einem ersten Verstärker (24) und ein unempfindlicher Verstärkungspfad mit einem zweiten Verstärker (26) sowie ein Empfangssignal-Aufteilungselement (22) vorgesehen ist, über welches das Empfangssignal beiden Verstärkungspfaden parallel zuführbar ist, so dass das Empfangssignal innerhalb eines Dynamikbereichs größer demjenigen jedes einzelnen Verstärkers (24, 26) zumindest in einem der Verstärkungspfade weitgehend informationsverlustfrei verstärkt werden kann, **dadurch gekennzeichnet,**
**dass** die Verstärkungspfade über ein Signal-Kombinierelement (38) auf einen gemeinsamen Analog/Digital-Wandler (40) geführt sind, und dass die Auswertungseinheit (32) dafür ausgebildet ist, die kombinierten Teilsignale aus den Verstärkungspfaden nach der Digitalisierung wieder voneinander zu trennen.

2. Laserscanner (10) nach Anspruch 1,
wobei das Lichtempfangselement dafür ausgebildet ist, das empfangene Licht in einen Photostrom (I) zu wandeln, und wobei das Empfangssignal-Aufteilungselement (22) Teilströme (I1, I2), insbesondere unterschiedlich starke Teilströme des Photostroms (I) erzeugen und den Verstärkungspfaden zuführen kann.

3. Laserscanner (10) nach Anspruch 1 oder 2,
wobei der erste Verstärker (24) mit einem empfindlicheren Dynamikbereich und/oder mit einem größeren Verstärkungsfaktor ausgebildet ist als der zweite Verstärker (26).

4. Laserscanner (10) nach einem der vorhergehenden Ansprüche,
wobei die effektive Gesamtverstärkung in dem empfindlichen Pfad groß gegen die effektive Gesamtverstärkung in dem unempfindlichen Pfad ist.

5. Laserscanner (10) nach einem der vorhergehenden Ansprüche,
wobei der Analog/Digital-Wandler (28, 30, 40) gemeinsam mit einem Speicher (42) auf einem Baustein ausgebildet ist, in dem digitalisierte Empfangssignale abgelegt werden können.

6. Laserscanner (10) nach einem der vorhergehenden Ansprüche,
wobei das Signal-Kombinierelement als Addierer (38) ausgebildet ist.

7. Laserscanner (10) nach einem der vorhergehenden Ansprüche,
wobei die Auswertungseinheit (32) einen Vorverarbeitungsabschnitt (34) aufweist, der insbesondere für eine digitale Filterung und/oder digitale Invertierung bekannter Verzerrungen in dem der Digitalisierung vorgeordneten analogen Verarbeitungspfad, insbesondere den Verstärkungspfaden, ausgebildet ist.

8. Laserscanner (10) nach einem der vorhergehenden Ansprüche,
wobei die Auswertungseinheit (32) einen Hauptbearbeitungsabschnitt (36) aufweist, der dafür ausgebildet ist, mehrere oder sämtliche Peaks eines auf ein ausgesandtes Lichtsignal (12) folgenden Empfangssignals (18) daraufhin auszuwerten, welcher Peak einem Objekt (16) zuzuordnen ist, dessen Entfernung bestimmt werden soll, insbesondere mittels Funktionsfit.

9. Laserscanner (10) nach Anspruch 8,
wobei der Vorverarbeitungsabschnitt (34) oder der Hauptbearbeitungsausschnitt (36) für eine Vorselektion ausgebildet ist, mittels derer entschieden wird, ob jeweils für eine Entfernungsbestimmung die Peaks des Empfangssignals (18) aus dem empfindlichen oder aus dem unempfindlichen Verstärkungspfad oder aus beiden Verstärkungspfaden ausgewertet werden.

10. Laserscanner (10) nach einem der vorhergehenden Ansprüche,
wobei ein dritter und/oder weiterer Verstärkungspfad mit einem eigenen Empfindlichkeitsbereich vorgesehen ist.

11. Verfahren zur Erfassung von Entfernungen mittels eines Laserscanners (10) anhand einer Lichtlaufzeit zwischen Aussenden eines Lichtsignals (12) und Empfangen eines Empfangssignals (18), wobei das Empfangssignal verstärkt wird, wobei das Empfangssignal (18) aufgetrennt und in mindestens einem empfindlichen Verstärkungspfad und einem parallelen unempfindlichen Verstärkungspfad in jeweils einem Verstärker (24, 26) unterschiedlich verstärkt wird, so dass insgesamt das Empfangssignal innerhalb eines Dynamikbereichs weitgehend informationsverlustfrei verstärkt wird, der größer ist als derjenige jedes einzelnen Verstärkers (24, 26),
**dadurch gekennzeichnet,**
**dass** das Empfangssignal (18) digitalisiert wird, wobei vor der Digitalisierung die verstärkten Teilsignale aus den Verstärkungspfaden reversibel kombiniert und anschließend gemeinsam digitalisiert und nach der Digitalisierung wieder voneinander getrennt werden.

12. Verfahren nach Anspruch 11,
wobei das Empfangssignal (12) in einen Photostrom (I) gewandelt und jedem Verstärkungspfad unterschiedliche Teilströme (11, 12) des Photostroms (I) zugeführt werden, und wobei das Empfangssignal (18) in dem empfindlichen Verstärkungspfad mittels unterschiedlichen Verstärkungsfaktoren der Verstärker (24, 26) und/oder mittels des Verhältnisses der Teilströme (I1, I2) sehr viel stärker verstärkt wird als in dem unempfindlichen Verstärkungspfad .

13. Verfahren nach Anspruch 11 oder 12,
wobei mehrere oder sämtliche Peaks eines auf ein ausgesandtes Lichtsignal (12) folgenden Empfangssignals (18) ausgewertet werden, um denjenigen Peak zu identifizieren, welcher einem Objekt (16) zuzuordnen ist, dessen Entfernung bestimmt werden soll.

14. Verfahren nach einem der Ansprüche 11 bis 13,
wobei bei der Auswertung für jeden Peak entschieden wird, ob das in dem unempfindlichen Verstärkungspfad verstärkte Empfangssignal, das in dem empfindlichen Verstärkungspfad verstärkte Empfangssignal oder beide Empfangssignale ausgewertet werden, und wobei ein Entscheidungskriterium ist, ob in dem unempfindlichen Verstärkungspfad ein Peak identifiziert werden kann.

## Claims

1. A distance measuring laser scanner (10) having a laser light source for transmitting a light signal (12), a light receiving element for receiving a reception signal (18), an evaluation unit (32) configured for the determination of distances from a time of flight of the light signal (12), and an amplifier (24, 26) for the reception signal (18),
wherein at least a sensitive amplification path with a first amplifier (24) and an insensitive amplification path with a second amplifier (26) as well as a reception signal splitting element (22) for supplying the reception signal to the two amplification paths in parallel are provided, so that the reception signal can be amplified within a dynamic range greater than the dynamic range of each individual amplifier (24, 26) in at least one of the amplification paths largely without loss of information,
**characterized in that**
the amplification paths are connected to a common analog digital converter (40) via a signal-combining element (38), and **in that** the evaluation unit (32) is configured to again separate the combined partial signals of the amplification paths from one another after the digitization.

2. The laser scanner (10) according to claim 1,
wherein the light reception element is configured to convert the received light into a photocurrent (I), and wherein the reception signal splitting element (22) can generate partial currents (I1, I2), in particular partial currents of the photocurrent (I) of different magnitude, and supply the partial currents to the amplification paths.

3. The laser scanner (10) according to claim 1 or 2,
wherein the first amplifier (24) has a more sensitive dynamic range and/or a larger gain factor than the second amplifier (26).

4. The laser scanner (10) according to any of the preceding claims,
wherein the effective overall gain in the sensitive path is large as compared to the effective overall gain in the insensitive path.

5. The laser scanner (10) according to any of the preceding claims,
wherein the analog digital converter (28, 30, 40) is made with a memory (42) for storing the digitized reception signals on one component.

6. The laser scanner (10) according to any of the preceding claims,
wherein the signal-combining element is configured as an adder (38).

7. The laser scanner (10) according to any of the preceding claims,
wherein the evaluation unit (32) comprises a preprocessing section (34), which is in particular configured for a digital filtering and/or a digital inversion of known distortions in the analog processing path upstream the digitization, in particular the amplification paths.

8. The laser scanner (10) according to any of the preceding claims,
wherein the evaluation unit (32) comprises a main processing section (36) configured to evaluate several or all peaks of a reception signal (18) following a transmitted signal (12) to find out which peak is to be assigned to an object (16) whose distance is to be determined, in particular by means of fitting a function.

9. The laser scanner (10) according to claim 8,
wherein the preprocessing section (34) or the main processing section (36) are configured for a preselection used for deciding whether the peaks of the reception signal (18) from the sensitive amplification path, the insensitive amplification path, or both amplification paths are evaluated for a respective distance determination.

10. The laser scanner (10) according to any of the preceding claims,
wherein a third and/or a further amplification path with its own sensitivity range is provided.

11. A method for detecting distances by means of a laser scanner (10) based on a time of flight between transmission of a light signal (12) and reception of a reception signal (18), wherein the reception signal is received, wherein the reception signal (18) is split and differently amplified in at least a sensitive amplification path and a parallel insensitive amplification part with a respective amplifier (24, 26), so that as a result the reception signal is amplified largely without loss of information in a dynamic range which is greater than that of each individual amplifier (24, 26),
**characterized in that**
the reception signal (18) is digitized, wherein prior to the digitization the amplified partial signals from the amplification paths are combined in a reversible manner, and are subsequently digitized together and are again separated from one another after the digitization.

12. The method according to claim 11,
wherein the reception signal (12) is converted into a photocurrent (I), and different partial currents (I1, I2) of the photocurrent (I) are supplied to each amplification path, and wherein the reception signal (18) in the sensitive amplification path is amplified significantly stronger than in the insensitive amplification path due to different gain factors of the amplifiers (24, 26) and/or the ratio of the partial currents (I1, I2).

13. The method according to claim 11 or 12,
wherein several or all peaks of a reception signal (18) following a transmitted light signal (12) are evaluated to identify that peak which is to be assigned to an object (16) whose distance is to be determined.

14. The method according to any of claims 11 to 13,
wherein during the evaluation it is decided for each peak whether the reception signal amplified in the insensitive amplification path, the reception signal amplified in the sensitive amplification signal, or both reception signals are evaluated, and wherein one decision criterion is whether a peak can be identified in the insensitive amplification path.

## Revendications

1. Scanneur à laser (10) mesurant des éloignements, comprenant une source de lumière laser pour émettre un signal lumineux (12), un élément récepteur de lumière pour la réception d'un signal reçu (18), une unité d'évaluation (32), qui est réalisée pour la détermination d'éloignements à partir d'un temps de parcours du signal lumineux (12), ainsi qu'un amplificateur (24, 26) pour le signal reçu (18),
dans lequel il est prévu au moins un trajet d'amplification sensible avec un premier amplificateur (24) et un trajet d'amplification non sensible avec un second amplificateur (26) ainsi qu'un élément de subdivision de signal reçu (22) via lequel le signal reçu peut être amené parallèlement aux deux trajets d'amplification de telle façon que le signal reçu à l'intérieur d'une plage dynamique plus grande que celle de chaque amplificateur individuel (24, 26) peut être amplifié largement sans perte d'information au moins dans l'un des trajets d'amplification, **caractérisé en ce que**
les trajets d'amplification sont menés via un élément de combinaison de signaux (38) à un convertisseur analogique/numérique commun (40), et **en ce que** l'unité d'évaluation (32) est réalisée pour séparer à nouveau les uns des autres les signaux partiels combinés provenant des trajets d'amplification après la numérisation.

2. Scanneur à laser (10) selon la revendication 1,
dans lequel l'élément récepteur de lumière est réalisé pour convertir la lumière reçue en un courant photovoltaïque (I), et dans lequel l'élément de subdivision de signal reçu (22) est capable d'engendrer des courants partiels (I1, I2), en particulier des courants partiels d'intensité différente du courant photovoltaïque (I) et de les amener aux trajets d'amplification.

3. Scanneur à laser (10) selon la revendication 1 ou 2,
dans lequel le premier amplificateur (24) est réalisé avec une plage dynamique plus sensible et/ou avec un facteur d'amplification plus fort que le second amplificateur (26).

4. Scanneur à laser (10) selon l'une des revendications précédentes,
dans lequel l'amplification totale effective dans le trajet sensible est importante par rapport à l'amplification totale effective dans le trajet non sensible.

5. Scanneur à laser (10) selon l'une des revendications précédentes,
dans lequel le convertisseur analogique/numérique (28, 30, 40) est réalisé conjointement avec une mémoire (42) sur un composant dans lequel des signaux reçus numérisés peuvent être déposés.

6. Scanneur à laser (10) selon l'une des revendications précédentes,
dans lequel l'élément de combinaison de signaux est réalisé sous forme de circuit d'addition (38).

7. Scanneur à laser (10) selon l'une des revendications précédentes,
dans lequel l'unité d'évaluation (32) comprend une portion de prétraitement (34) qui est en particulier réalisée pour un filtrage numérique et/ou une inversion numérique de distorsions connues dans le trajet de traitement analogique disposé avant la numérisation, en particulier dans les trajets d'amplification.

8. Scanneur à laser (10) selon l'une des revendications précédentes,
dans lequel l'unité d'évaluation (32) comprend une portion de traitement principale (36) qui est réalisée pour évaluer plusieurs pics ou la totalité des pics d'un signal reçu (18) succédant à un signal lumineux (12) émis pour savoir quel pic doit être associé à un objet (16) dont l'éloignement doit être déterminé, en particulier au moyen d'un accord fonctionnel.

9. Scanneur à laser (10) selon la revendication 8,
dans lequel la portion de prétraitement (34) ou la portion de traitement principale (36) est réalisée pour effectuer une présélection au moyen de laquelle une décision est prise, pour une détermination d'éloignement respective, pour savoir s'il s'agit d'évaluer les pics du signal reçu (18) provenant du trajet d'amplification sensible ou ceux provenant du trajet d'amplification non sensible, ou encore ceux provenant des deux trajets d'amplification.

10. Scanneur à laser (10) selon l'une des revendications précédentes,
dans lequel il est prévu un troisième et/ou un autre trajet d'amplification avec une plage de sensibilité propre.

11. Procédé pour la détermination d'éloignements au moyen d'un scanneur à laser (10) à l'aide d'un temps de parcours de la lumière entre l'émission d'un signal lumineux (12) et la réception d'un signal reçu (18), dans lequel le signal reçu est amplifié, et le signal reçu (18) est subdivisé et est amplifié de façon différente dans au moins un trajet d'amplification sensible et un trajet d'amplification parallèle non sensible, dans un amplificateur respectif (24, 26), de sorte que le signal reçu est au total amplifié largement sans perte d'information à l'intérieur d'une plage dynamique qui est plus grande que celle de chaque amplificateur individuel (24, 26),
**caractérisé en ce que** le signal reçu (18) est numérisé, et les signaux partiels amplifiés provenant des trajets d'amplification sont combinés de manière réversible et ensuite numérisés conjointement, avant la numérisation, et sont à nouveau séparés les uns des autres après la numérisation.

12. Procédé selon la revendication 11,
dans lequel le signal reçu (12) est converti en un courant photovoltaïque (I), et des courants partiels différents (I1, I2) du courant photovoltaïque (I) sont amenés à chaque trajet d'amplification, et dans lequel le signal reçu (18) est amplifié, au moyen de facteurs d'amplification différents des amplificateurs (24, 26) et/ou au moyen du rapport des courants partiels (I1, I2), beaucoup plus fortement que dans le trajet d'amplification non sensible.

13. Procédé selon la revendication 11 ou 12,
dans lequel on évalue plusieurs pics ou la totalité des pics d'un signal reçu (18) qui fait suite à un signal lumineux émis (12), pour identifier celui des pics qu'il s'agit d'associer à un objet (16) dont l'éloignement doit être déterminé.

14. Procédé selon l'une des revendications ont 11 à 13,
dans lequel, lors de l'évaluation, on décide pour chaque pic si l'on évalue le signal reçu amplifié dans le trajet d'amplification non sensible, le signal reçu amplifié dans le trajet d'amplification sensible, ou encore les deux signaux reçus, et un critère de décision est ici de savoir s'il est possible d'identifier un pic dans le trajet d'amplification non sensible.
